# FASCICULE DE BREVET EUROPEEN

(11) **EP 2 874 468 B1**
(45) Date de publication et mention de la délivrance du brevet: **01.11.2023**
(21) Numéro de dépôt: 14188826.3
(22) Date de dépôt: 14.10.2014
(51) Int. Cl.: B60Q 1/00, H05B 45/46

(54) **Dispositif de commande d'une pluralité d'ensembles de LED, notamment pour véhicule automobile**
Vorrichtung zur Steuerung einer Vielzahl von LED-Anordnungen, insbesondere für Kraftfahrzeug
Device for controlling a plurality of LED units, in particular for a motor vehicle

(30) Priorité: 15.10.2013 FR 1360009
(43) Date de publication de la demande: 20.05.2015
(73) Titulaire: VALEO VISION, 93012 Bobigny Cedex (FR)
(72) Inventeur: Duarte, Marc, 93250 VILLEMOMBLE (FR); Krick, Sebastian, 75019 PARIS (FR)
(74) Mandataire: Valeo Visibility

(56) Documents cités:
- US-A1- 2004 075 393
- US-A1- 2004 179 366
- US-A1- 2009 026 958
- US-A1- 2013 207 559

## Description

La présente invention concerne un dispositif de commande d'une pluralité d'ensembles de diodes électroluminescentes (ou LED, initiales anglo-saxonnes mises pour *light emitting diodes*) associés à des fonctions d'éclairage et/ou de signalisation d'un véhicule automobile.

Dans les véhicules automobiles, plusieurs ensembles de LED sont installés, chaque ensemble de LED ayant une fonction d'éclairage et/ou de signalisation spécifique. Parmi les nombreuses fonctions mises en oeuvre sur les véhicules automobiles, on peut citer, à titre d'exemple non limitatif, l'éclairage de croisement (ou LB, initiales anglo-saxonnes mises pour *low beam*)*,* les feux de position (ou PL, initiales anglo-saxonnes mises pour *parking lights*) et les feux diurnes (ou DRL, initiales anglo-saxonnes mises pour *daytime running lamp*)*.* De nombreuses autres fonctions, telles que les feux de stop ou les feux clignotant (ou TI, initiales anglo-saxonnes mises pour *turn indicator*) sont mises en oeuvre par des ensembles LED, qui peuvent être situés à l'avant, à l'arrière ou sur côtés des véhicules automobiles.

Les fonctions précitées et les ensembles de LED eux-mêmes font l'objet d'une réglementation stricte de leurs paramètres, parmi lesquels l'intensité d'éclairement minimum et/ou maximum, la puissance électrique nécessaire à l'exécution de chacune des fonctions, la répartition de l'intensité d'éclairement pour l'éclairage routier, compte tenu des conditions de circulation.

Ces ensembles de LED doivent donc être alimentés en énergie électrique conformément aux normes et réglementations en vigueur et peuvent être commandés de manière successive ou simultanée. Par exemple, les fonctions LB et PL sont prévues pour être mises en marche simultanément. En outre, les ensembles de LED et leurs commandes associées doivent être intégrés aux véhicules avec le plus faible encombrement possible.

Le document FR 2 959 181 A1 décrit un dispositif connu de commande d'ensembles de LED dans lequel des moyens de modulation du niveau de puissance électrique, des moyens de multiplexage et des moyens de démultiplexage permettent de délivrer et de distribuer des niveaux de puissance électrique distincts à des ensembles de LED en relation avec les fonctions associées respectives.

Cependant, ce type d'architecture ne permet pas de maîtriser des faibles courants obligatoires pour certaines fonctions, notamment de signalisation. En outre, l'encombrement de ces dispositifs reste à optimiser.

La publication US2009026958A1 divulgue un dispositif selon le préambule de la revendication 1.

La présente invention a pour objectif de remédier aux inconvénients cités ci-dessus en proposant une architecture simple et compacte de dispositif de commande d'une pluralité d'ensembles de LED, avec une parfaite maîtrise des faibles courants.

La présente invention répond à cet objectif en proposant un dispositif de commande d'une pluralité d'ensembles de LED, notamment pour un véhicule automobile, la pluralité d'ensembles de LED comprenant au moins un premier ensemble de LED associé à au moins une première fonction d'éclairage et/ou de signalisation et un deuxième ensemble de LED associé à au moins une deuxième et une troisième fonction d'éclairage et/ou de signalisation. Le dispositif de commande comprend une source de puissance électrique apte à être connectée, notamment en parallèle, au premier ensemble de LED et au deuxième ensemble de LED et à délivrer au moins deux niveaux de puissance électrique distincts adaptés respectivement pour la première fonction, et pour la deuxième fonction d'éclairage et/ou de signalisation. Le dispositif de commande comprend également un module de commutation apte à être connecté, notamment en série, avec le premier ensemble de LED et à basculer entre une première position, notamment ouverte, dans laquelle seul le deuxième ensemble de LED est alimenté en puissance électrique, et une deuxième position, notamment fermée, dans laquelle le premier ensemble de LED et le deuxième ensemble de LED sont alimentés simultanément en puissance électrique . Le dispositif de commande comprend en outre un module de régulation de courant électrique apte à être connecté, notamment en série, avec le deuxième ensemble de LED et à basculer entre une position de régulation pour ajuster un troisième niveau de puissance électrique adapté pour une troisième fonction d'éclairage et/ou de signalisation et une position de court-circuit.

Par le terme « ensemble de LED associé à une fonction», on entend que l'ensemble LED est agencé pour générer, par exemple à l'aide de moyens optiques de l'ensemble, ladite fonction. Les fonctions d'éclairage et/ou de signalisation sont des fonctions photométriques réglementaires prédéterminées. Chaque ensemble de LED est apte à générer la totalité de la ou des fonctions qui lui sont associées.

L'alimentation en puissance électrique du deuxième ensemble de LED permet de générer la totalité de la deuxième fonction d'éclairage et/ou de signalisation. De manière similaire, l'alimentation simultanée en puissance électrique du premier et du deuxième ensemble de LED permet de générer la totalité de la première et de la troisième fonction d'éclairage et/ou de signalisation.

Le module de régulation peut également basculer vers une position ouverte de manière à ce que seulement le premier ensemble de LED soit alimenté pour la première fonction.

Selon un mode de réalisation de l'invention, le basculement du module de régulation de courant électrique entre la position de régulation et la position de court-circuit est piloté par un signal de commande issu de la source de puissance électrique.

Préférentiellement, la source de puissance électrique comprend une source de puissance électrique à tension ajustable à au moins deux niveaux de courant distincts correspondant respectivement auxdits au moins deux niveaux de puissance électrique distincts. Selon une variante, la source de puissance électrique à tension ajustable comprend un convertisseur de tension continue-continue.

Selon un mode de réalisation, le module de régulation de courant électrique comprend une source de courant ajustable, le dispositif comprenant en outre un module de modulation connecté, notamment en série, entre la source de puissance électrique et la source de courant ajustable, le module de modulation étant apte à contrôler la source de courant ajustable pour ajuster le troisième niveau de puissance électrique.

Avantageusement, le module de régulation délivre un signal de contrôle de la source de courant ajustable, le signal de contrôle étant modulé en largeur d'impulsion et présentant un rapport cyclique choisi de façon à ce que la source de courant ajuste le troisième niveau de puissance électrique.

Le cas échéant, le rapport cyclique est choisi de manière à ce que l'intensité du courant traversant le deuxième ensemble de LED soit supérieure à une valeur nominale, notamment 100 mA, et tout en garantissant que le flux lumineux émis par les LED du deuxième ensemble ne dépasse pas une valeur maximale autorisée par la réglementation.

Dans le domaine automobile, les LED sont généralement agencées pour émettre un flux lumineux proportionnel à l'intensité de courant les traversant, lorsque cette intensité est supérieure à la valeur nominale, par exemple 100mA. Ce n'est pas le cas lorsque cette intensité est inférieure à la valeur nominale. Or, dans le cas de certaines fonctions photométriques, la puissance maximale autorisée nécessite une intensité bien inférieure à cette valeur. La caractéristique précitée offre donc l'avantage de pouvoir alimenter les LED avec une intensité électrique garantissant une parfaite connaissance de leur performance lumineuse tout en conservant la conformité de la fonction photométrique avec la réglementation.

Selon une variante, le module de régulation de courant électrique comprend une source de courant linéaire.

Selon un mode de réalisation de l'invention, la pluralité d'ensembles de LED comprend en outre un troisième ensemble de LED apte à être connecté en série au premier ensemble de LED pour former un quatrième ensemble de LED associé à une quatrième fonction d'éclairage et/ou de signalisation.

Avantageusement, le dispositif comprend en outre un interrupteur électronique apte à être connecté, notamment en parallèle, au troisième ensemble de LED et apte à basculer en position, notamment fermée, pour la commande de la première fonction d'éclairage et/ou de signalisation et en position, notamment ouverte, pour la commande de la quatrième fonction d'éclairage et/ou de signalisation.

La première fonction d'éclairage et/ou de signalisation peut être celle de l'éclairage de croisement, la deuxième fonction celle des feux diurnes et la troisième fonction celle des feux de position.

Selon un autre exemple, la première fonction d'éclairage et/ou de signalisation peut être celle de l'éclairage antibrouillard, la deuxième fonction celle des feux diurnes, la troisième fonction celle des feux de position et la quatrième fonction celle de l'éclairage de croisement.

La quatrième fonction d'éclairage et/ou de signalisation peut être celle de l'éclairage de route ou celle de l'éclairage de croisement.

Selon un mode de réalisation, le module de commutation est connecté entre la source de puissance électrique et le premier ensemble de LED.

Selon une variante, le module de commutation est connecté entre le premier ensemble de LED et une référence de potentiel.

L'invention et les avantages qu'elle procure seront mieux compris au vu de la description suivante d'un mode de réalisation et d'un exemple non limitatif de mise en oeuvre de l'invention, faite en référence à la figure annexée, dans laquelle :

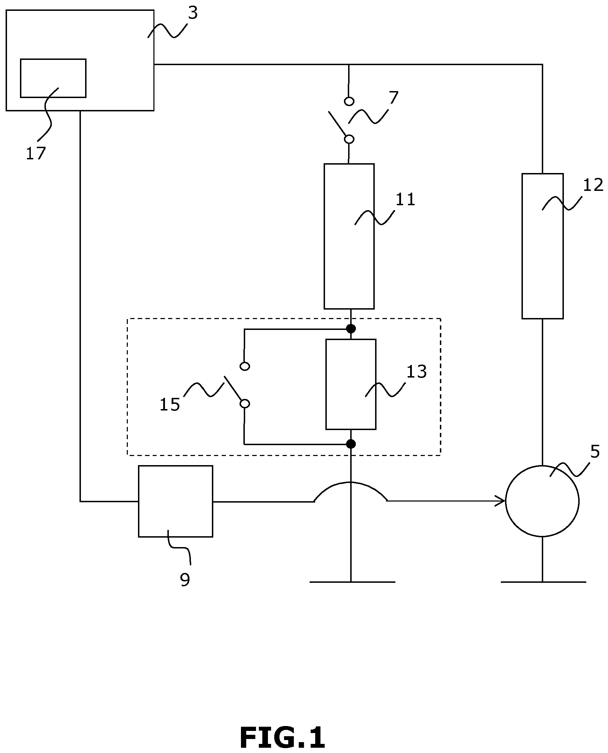

- la figure 1 illustre schématiquement un mode de réalisation d'un dispositif de commande d'une pluralité d'ensembles LED, conforme à l'objet de la présente invention.

La figure 1 représente un dispositif de commande d'une pluralité d'ensembles de LED selon un mode de réalisation possible de l'invention. Le dispositif de commande est notamment adapté pour être implémenté dans un véhicule automobile. La pluralité d'ensembles de LED comprend au moins un premier ensemble 11 de LED et un deuxième ensemble 12 de LED dans deux branches parallèles. Le premier ensemble 11 de LED est associé à une première fonction d'éclairage et/ou de signalisation. Le deuxième ensemble 12 de LED est associé à une deuxième et une troisième fonction d'éclairage et/ou de signalisation. Ainsi, un seul ensemble de LED peut être utilisé pour deux fonctions d'éclairage et/ou de signalisation, en ne gardant qu'un seul circuit d'alimentation.

Le dispositif de commande selon le mode de réalisation comprend une source 3 de puissance électrique, destinée à être connectée en parallèle à chaque branche comprenant le premier ensemble 11 de LED et le deuxième ensemble 12 de LED. La source 3 de puissance électrique délivre au moins deux niveaux de puissance électrique distincts. Les niveaux de puissance électrique sont en relation directe avec la fonction associée, ou les fonctions associées, à chaque ensemble 11, 12 de LED. La source 3 de puissance électrique est notamment adaptée pour délivrer une tension de sortie *U*ₒᵤₜ et un courant de sortie *I*ₒᵤₜ correspondant afin de fournir le niveau de puissance électrique requis. La source 3 de puissance électrique peut être alimentée par une source de tension (non représentée) du véhicule telle que la batterie du véhicule.

La source 3 de puissance électrique comprend, par exemple, une source de puissance électrique à tension ajustable à au moins deux niveaux de courant distincts, dans laquelle les niveaux de courant distincts correspondent respectivement aux deux niveaux de puissance électrique distincts. De manière plus spécifique, la source 3 de puissance électrique peut avantageusement être constituée par un convertisseur de tension continue-continue, celui-ci étant alimenté par la batterie du véhicule. La valeur de la tension de sortie de la source 3 de puissance électrique peut être inférieure, supérieure ou avoisinante par rapport à la valeur de tension délivrée par la batterie du véhicule.

De manière préférentielle, la source 3 de puissance électrique comprend également un module 17 de commande de puissance pour sélectionner le niveau de puissance électrique en relation avec la fonction d'éclairage et/ou de signalisation demandée.

Le dispositif selon le mode de réalisation comporte également un module 7 de commutation. Le module 7 de commutation est connecté en série avec le premier ensemble 11 de LED, et peut basculer entre une position ouverte, dans laquelle seul le deuxième ensemble 12 de LED est alimenté en puissance électrique, et une position fermée, dans laquelle le premier et le deuxième ensemble 11, 12 de LED sont alimentés simultanément en puissance électrique. Ainsi, en position ouverte, seule la deuxième fonction d'éclairage et/ou de signalisation est active, alors qu'en position fermée, la première et la troisième fonction d'éclairage et/ou de signalisation sont actives simultanément. Le dispositif de commande selon l'invention est donc d'une architecture très simple et compacte.

Dans le mode de réalisation représenté sur la figure 1, le module 7 de commutation est connecté entre la source 3 de puissance électrique et le premier ensemble 11 de LED. Il peut également être connecté entre le premier ensemble 11 de LED et une référence de potentiel.

En outre, le dispositif comprend un module 5 de régulation de courant électrique connecté en série avec le deuxième ensemble 12 de LED. Le module 5 de régulation de courant électrique peut basculer entre une position de régulation et une position de court-circuit. En position de régulation, le module 5 de régulation ajuste la puissance électrique délivré au deuxième ensemble 12 de LED pour obtenir un troisième niveau de puissance électrique. Ce troisième niveau de puissance électrique est en relation directe avec la troisième fonction d'éclairage et/ou de signalisation. L'ajustement de la puissance électrique est réalisé par le module 5 de régulation en limitant et en stabilisant le courant électrique passant dans le deuxième ensemble 12 de LED.

La tension aux bornes de chaque branche dépend généralement du nombre et/ou du type des LED utilisés dans les ensembles de LED inclus dans les branches. Le module 5 de régulation permet d'équilibrer les tensions au premier ensemble 11 de LED d'une part et au deuxième ensemble 12 de LED d'autre part.

Lorsque le module 5 de régulation de courant électrique est en position de court-circuit, le courant passant dans le deuxième ensemble 12 de LED correspond au niveau de la puissance électrique délivré par la source 3 de puissance électrique pour le deuxième ensemble 12 de LED. Le basculement du module 5 de régulation entre la position de régulation et la position de court-circuit est piloté par un signal de commande issu de la source 3 de puissance électrique, et notamment du module 17 de commande de puissance électrique.

Spécifiquement, le module 5 de régulation peut avantageusement être constitué par une source de courant ajustable, le dispositif comprenant en outre un module 9 de modulation connecté en série entre la source 3 de puissance électrique et la source de courant ajustable, le module 9 de modulation étant apte à contrôler la source de courant ajustable pour ajuster le troisième niveau de puissance électrique. De manière alternative, le module 5 de régulation de courant électrique peut être une source de courant linéaire. Par exemple, le module 5 de régulation peut être commandé par le module 17 de commande de puissance, soit en continu, soit au moyen d'une PWM (modulation de largeur d'impulsions, initiales anglo-saxonnes mises pour *Pulse Width Modulation*), représentée par le module 9 de modulation.

Sur la figure 1 est également représenté un troisième ensemble 13 de LED, faisant partie de la pluralité d'ensembles de LED. Le troisième ensemble 13 de LED est connecté en série au premier ensemble 11 de LED. Ainsi, le premier ensemble 11 de LED et le troisième ensemble 13 de LED forment un quatrième ensemble de LED étant associé à une quatrième fonction d'éclairage et/ou de signalisation. Le dispositif de commande selon un mode de réalisation comprend un interrupteur électronique 15 connecté en parallèle au troisième ensemble 13 de LED. L'interrupteur électronique 15 peut basculer en position fermée pour la commande de la première fonction d'éclairage et/ou de signalisation et en position ouverte pour la commande de la quatrième fonction d'éclairage et/ou de signalisation, respectivement en simultané avec la troisième fonction d'éclairage et/ou de signalisation. L'interrupteur électronique 15 peut être constitué par un transistor.

Un exemple de mise en oeuvre du dispositif de commande selon l'invention sera décrit par la suite. La source 3 de puissance électrique est un convertisseur de tension continue-continue alimenté par une tension d'environ 12 à 14V délivrée par la batterie de la voiture. Typiquement, une LED d'un des ensembles 11, 12, 13 de LED nécessite, pour son fonctionnement, environ 3 à 4V.

Selon l'exemple, le premier ensemble 11 de LED est associé à la fonction LB (éclairage de croisement). Le deuxième ensemble 12 de LED est associé aux fonctions DRL (feux diurnes) et PL (feux de position). Lorsque le module 7 de commutation est ouvert, le deuxième ensemble 12 de LED est alimenté en puissance électrique, et le convertisseur 3 de tension continue-continue ajuste la tension de sortie *U*ₒᵤₜ et le courant de sortie *I*ₒᵤₜ correspondant afin de délivrer le niveau de puissance électrique requis pour la fonction DRL. Typiquement, un ensemble de LED ayant la fonction DRL comporte 5 ou 6 LED. La tension de sortie est donc d'environ 20 à 24V. Le courant de sortie, *I*ₒᵤₜ = *I*_{DRL}, est d'environ 200mA.

Lorsque le module 7 de commutation est fermé, le premier ensemble 11 de LED est alimenté en puissance électrique, et le convertisseur 3 ajuste la tension de sortie *U*ₒᵤₜ et le courant de sortie *I*ₒᵤₜ correspondant afin de délivrer le niveau de puissance électrique requis pour l'ensemble des fonctions LB et PL. Le courant de sortie s'écrit alors *I*ₒᵤₜ = *I*_{LB} + *I*_{PL}, où *I*_{PL} « *I*_{LB}, la fonction LB ne nécessitant qu'un très faible courant électrique. Par exemple, *I*_{LB} est d'environ 1A, et *I*_{PL} est d'environ 20mA. Dans ce cas, le module de régulation, qui peut être, comme indiqué précédemment, une source de courant linéaire ou ajustable, limite et stabilise le courant *I*_{PL} à environ 20mA. Typiquement, un ensemble de LED ayant la fonction LB comporte 8 LED. La tension de sortie est donc d'environ 32V. Pour la fonction PL, le même ensemble de LED que pour la fonction LB est utilisé.

Le dispositif de commande selon l'invention peut être implémenté avec d'autres fonctions d'éclairage et/ou de signalisation que celles mentionnées dans l'exemple décrit ci-dessus. En effet, le dispositif de commande selon l'invention est particulièrement bien adapté dès lors qu'il existe un besoin de commander en simultané différentes fonctions d'éclairage et/ou de signalisation nécessitant différentes puissances électriques, ayant des rapports de courant électriques très différents, tout en équilibrant les tensions dans les branches du dispositif de commande grâce au module de régulation de courant électrique.

## Revendications

1. Dispositif de commande d'une pluralité d'ensembles de LED pour un véhicule automobile, la pluralité d'ensembles de LED comprenant au moins un premier ensemble (11) de LED associé à au moins une première fonction d'éclairage et/ou de signalisation et un deuxième ensemble (12) de LED associé à au moins une deuxième et une troisième fonction d'éclairage et/ou de signalisation, le dispositif de commande comprenant :
- une source (3) de puissance électrique apte à être connectée, en parallèle, au premier ensemble (11) de LED et au deuxième ensemble (12) de LED et à délivrer au moins deux niveaux de puissance électrique distincts adaptés respectivement pour la première fonction et pour la deuxième fonction d'éclairage et/ou de signalisation;
- un module (7) de commutation apte à être connecté, en série, avec le premier ensemble (11) de LED et à basculer entre une première position, ouverte, dans laquelle seul le deuxième ensemble (12) de LED est alimenté en puissance électrique, et une deuxième position, fermée, dans laquelle le premier ensemble (11) de LED et le deuxième ensemble (12) de LED sont alimentés simultanément en puissance électrique ; et
- un module (5) de régulation de courant électrique apte à être connecté, en série, avec le deuxième ensemble (12) de LED et à basculer entre une position de régulation pour ajuster un troisième niveau de puissance électrique adapté pour une troisième fonction d'éclairage et/ou de signalisation et une position de court-circuit,
**caractérisé en ce que** la pluralité d'ensembles de LED comprenant en outre un troisième ensemble (13) de LED apte à être connecté en série au premier ensemble (11) de LED pour former un quatrième ensemble de LED associé à une quatrième fonction d'éclairage et/ou de signalisation, et **en ce que** le dispositif comprend en outre un interrupteur électronique (15) apte à être connecté, en parallèle, au troisième ensemble (13) de LED et apte à basculer en position, fermée, pour la commande de la première fonction d'éclairage et/ou de signalisation et en position, ouverte, pour la commande de la quatrième fonction d'éclairage et/ou de signalisation.

2. Dispositif selon la revendication 1, dans lequel le basculement du module (5) de régulation de courant électrique entre la position de régulation et la position de court-circuit est piloté par un signal de commande issu de la source (3) de puissance électrique.

3. Dispositif selon l'une des revendications 1 et 2, dans lequel la source (3) de puissance électrique comprend une source de puissance électrique à tension ajustable à au moins deux niveaux de courant distincts correspondant respectivement auxdits au moins deux niveaux de puissance électrique distincts.

4. Dispositif selon la revendication 3, dans lequel la source de puissance électrique à tension ajustable comprend un convertisseur de tension continue-continue.

5. Dispositif selon l'une quelconque des revendications précédentes, dans lequel le module (5) de régulation de courant électrique comprend une source de courant linéaire.

6. Dispositif selon l'une quelconque des revendications 1 à 4, dans lequel le module (5) de régulation de courant électrique comprend une source de courant ajustable, le dispositif comprenant en outre un module (9) de modulation connecté, en série, entre la source (3) de puissance électrique et la source de courant ajustable, le module (9) de modulation étant apte à contrôler la source de courant ajustable pour ajuster le troisième niveau de puissance électrique.

7. Dispositif selon la revendication précédente, **caractérisé en ce que** le module (5) de régulation délivre un signal de contrôle de la source de courant ajustable, le signal de contrôle étant modulé en largeur d'impulsion et présentant un rapport cyclique choisi de façon à ce que la source de courant ajuste le troisième niveau de puissance électrique.

8. Dispositif selon l'une quelconque des revendications précédentes, dans lequel la quatrième fonction d'éclairage et/ou de signalisation est celle de l'éclairage de route.

9. Dispositif selon l'une quelconque des revendications précédentes, dans lequel la première fonction d'éclairage et/ou de signalisation est celle de l'éclairage de croisement, la deuxième fonction est celle des feux diurnes et la troisième fonction est celle des feux de position.

10. Dispositif selon quelconque des revendications précédentes, dans lequel la quatrième fonction d'éclairage et/ou de signalisation est celle de l'éclairage de croisement.

11. Dispositif selon l'une des revendications 1 à 7 et 10, dans lequel la première fonction d'éclairage et/ou de signalisation est celle de l'éclairage antibrouillard, la deuxième fonction celle des feux diurnes et la troisième fonction celle des feux de position.

12. Dispositif selon l'une des revendications précédentes, dans lequel le module (7) de commutation est connecté entre la source (3) de puissance électrique et le premier ensemble (11) de LED.

13. Dispositif selon l'une des revendications 1 à 11, dans lequel le module (7) de commutation est connecté entre le premier ensemble (11) de LED et une référence de potentiel.

## Patentansprüche

1. Steuervorrichtung einer Vielzahl von LED-Einheiten für ein Kraftfahrzeug, wobei die Vielzahl von LED-Einheiten mindestens eine erste LED-Einheit (11), die mindestens einer ersten Beleuchtungs- und/oder Signalisierungsfunktion zugeordnet ist, und eine zweite LED-Einheit (12) enthält, die mindestens einer zweiten und einer dritten Beleuchtungs- und/oder Signalisierungsfunktion zugeordnet ist, wobei die Steuervorrichtung enthält:
- eine elektrische Leistungsquelle (3), die fähig ist, mit der ersten LED-Einheit (11) und mit der zweiten LED-Einheit (12) parallelgeschaltet zu werden und mindestens zwei unterschiedliche elektrische Leistungspegel zu liefern, die für die erste bzw. für die zweite Beleuchtungs- und/oder Signalisierungsfunktion geeignet sind;
- ein Schaltmodul (7), das fähig ist, mit der ersten LED-Einheit (11) in Reihe geschaltet zu werden, und zwischen einer ersten offenen Stellung, in der nur die zweite LED-Einheit (12) mit elektrische Leistung gespeist wird, und einer zweiten geschlossenen Stellung umzuschalten, in der die erste LED-Einheit (11) und die zweite LED-Einheit (12) gleichzeitig mit elektrischer Leistung gespeist werden; und
- ein elektrisches Stromregelungsmodul (5), das fähig ist, mit der zweiten LED-Einheit (12) in Reihe geschaltet zu werden, und zwischen einer Regelungsstellung, um einen dritten elektrischen Leistungspegel anzupassen, der für eine dritte Beleuchtungs- und/oder Signalisierungsfunktion geeignet ist, und einer Kurzschlussstellung umzuschalten,
**dadurch gekennzeichnet, dass** die Vielzahl von LED-Einheiten außerdem eine dritte LED-Einheit (13) enthält, die fähig ist, mit der ersten LED-Einheit (11) in Reihe geschaltet zu werden, um eine vierte LED-Einheit zu bilden, die einer vierten Beleuchtungs- und/oder Signalisierungsfunktion zugeordnet ist,
und dass die Vorrichtung außerdem einen elektronischen Schalter (15) enthält, der fähig ist, mit der dritten LED-Einheit (13) parallelgeschaltet zu werden, und fähig ist, für die Steuerung der ersten Beleuchtungs- und/oder Signalisierungsfunktion in die geschlossene Stellung und für die Steuerung der vierten Beleuchtungs- und/oder Signalisierungsfunktion in die offene Stellung umzuschalten.

2. Vorrichtung nach Anspruch 1, wobei das Umschalten des elektrischen Stromregelungsmoduls (5) zwischen der Regelungsstellung und der Kurzschlussstellung von einem Steuersignal gesteuert wird, das von der elektrische Leistungsquelle (3) kommt.

3. Vorrichtung nach einem der Ansprüche 1 und 2, wobei die elektrische Leistungsquelle (3) eine elektrische Leistungsquelle mit an mindestens zwei unterschiedliche Strompegel anpassbarer Spannung enthält, die den mindestens zwei unterschiedlichen elektrischen Leistungspegeln entsprechen.

4. Vorrichtung nach Anspruch 3, wobei die elektrische Leistungsquelle mit anpassbarer Spannung einen Gleichspannungs-Gleichspannungs-Wandler enthält.

5. Vorrichtung nach einem der vorhergehenden Ansprüche, wobei das elektrische Stromregelungsmodul (5) eine lineare Stromquelle enthält.

6. Vorrichtung nach einem der Ansprüche 1 bis 4, wobei das elektrische Stromregelungsmodul (5) eine anpassbare Stromquelle enthält, wobei die Vorrichtung außerdem ein Modulationsmodul (9) enthält, das zwischen der elektrischen Leistungsquelle (3) und der anpassbaren Stromquelle in Reihe geschaltet ist, wobei das Modulationsmodul (9) fähig ist, die anpassbare Stromquelle zu steuern, um den dritten elektrischen Leistungspegel anzupassen.

7. Vorrichtung nach dem vorhergehenden Anspruch, **dadurch gekennzeichnet, dass** das Regelungsmodul (5) ein Steuersignal der anpassbaren Stromquelle liefert, wobei das Steuersignal impulsbreitenmoduliert ist und ein Tastverhältnis aufweist, das so gewählt wird, dass die Stromquelle den dritten elektrischen Leistungspegel anpasst.

8. Vorrichtung nach einem der vorhergehenden Ansprüche, wobei die vierte Beleuchtungs- und/oder Signalisierungsfunktion diejenige der Straßenbeleuchtung ist.

9. Vorrichtung nach einem der vorhergehenden Ansprüche, wobei die erste Beleuchtungs- und/oder Signalisierungsfunktion diejenige der Abblendbeleuchtung ist, die zweite Funktion diejenige der Tagfahrleuchten ist, und die dritte Funktion diejenige der Begrenzungsleuchten ist.

10. Vorrichtung nach einem der vorhergehenden Ansprüche, wobei die vierte Beleuchtungs- und/oder Signalisierungsfunktion diejenige der Abblendbeleuchtung ist.

11. Vorrichtung nach einem der Ansprüche 1 bis 7 und 10, wobei die erste Beleuchtungs- und/oder Signalisierungsfunktion diejenige der Nebelbeleuchtung, die zweite Funktion diejenige der Tagfahrleuchten, und die dritte Funktion diejenige der Begrenzungsleuchten ist.

12. Vorrichtung nach einem der vorhergehenden Ansprüche, wobei das Schaltmodul (7) zwischen der elektrischen Leistungsquelle (3) und der ersten LED-Einheit (11) verbunden ist.

13. Vorrichtung nach einem der Ansprüche 1 bis 11, wobei das Schaltmodul (7) zwischen der ersten LED-Einheit (11) und einer Potentialreferenz verbunden ist.

## Claims

1. Control device for controlling a plurality of sets of LEDs for a motor vehicle, the plurality of sets of LEDs comprising at least a first set (11) of LEDs that is associated with at least a first lighting and/or signalling function and a second set (12) of LEDs that is associated with at least a second and a third lighting and/or signalling function, the control device comprising:
- an electrical power source (3) able to be connected in parallel to the first set (11) of LEDs and to the second set (12) of LEDs and to deliver at least two different electrical power levels suitable respectively for the first lighting and/or signalling function and for the second lighting and/or signalling function;
- a switching module (7) able to be connected in series with the first set (11) of LEDs and to switch between an open, first position in which only the second set (12) of LEDs is supplied with electrical power, and a closed, second position in which the first set (11) of LEDs and the second set (12) of LEDs are supplied with electrical power simultaneously; and
- a module (5) for regulating electrical current able to be connected in series with the second set (12) of LEDs and to switch between a regulating position enabling adjustment of a third electrical power level suitable for a third lighting and/or signalling function and a short-circuit position,
**characterized in that** the plurality of sets of LEDs furthermore comprise a third set (13) of LEDs able to be connected in series to the first set (11) of LEDs in order to form a fourth set of LEDs associated with a fourth lighting and/or signalling function, and **in that** the device furthermore comprises an electronic switch (15) able to be connected in parallel to the third set (13) of LEDs and able to switch into a closed position enabling control of the first lighting and/or signalling function and into an open position enabling control of the fourth lighting and/or signalling function.

2. Device according to Claim 1, in which a control signal originating from the electrical power source (3) is used to switch the module (5) for regulating electrical current between the regulating position and the short-circuit position.

3. Device according to one of Claims 1 and 2, in which the electrical power source (3) comprises an electrical power source providing a voltage that is adjustable to at least two different current levels corresponding respectively to said at least two different electrical power levels.

4. Device according to Claim 3, in which the adjustable-voltage electrical power source comprises a DC/DC voltage converter.

5. Device according to any one of the preceding claims, in which the module (5) for regulating electrical current comprises a linear current source.

6. Device according to any one of Claims 1 to 4, in which the module (5) for regulating electrical current comprises an adjustable current source, the device furthermore comprising a modulating module (9) connected in series between the electrical power source (3) and the adjustable current source, the modulating module (9) being able to control the adjustable current source in order to adjust the third electrical power level.

7. Device according to the preceding claim, **characterized in that** the regulating module (5) delivers a control signal for controlling the adjustable current source, the control signal being pulse-width modulated and having a duty cycle chosen such that the current source adjusts the third electrical power level.

8. Device according to any one of the preceding claims, in which the fourth lighting and/or signalling function is a high beam function.

9. Device according to any one of the preceding claims, in which the first lighting and/or signalling function is a low beam function, the second function is a daytime running light function and the third function is a position light function.

10. Device according to any one of the preceding claims, in which the fourth lighting and/or signalling function is a low beam function.

11. Device according to one of Claims 1 to 7 and 10, in which the first lighting and/or signalling function is a fog light function, the second function is a daytime running light function and the third function is a position light function.

12. Device according to one of the preceding claims, in which the switching module (7) is connected between the electrical power source (3) and the first set (11) of LEDs.

13. Device according to one of Claims 1 to 11, in which the switching module (7) is connected between the first set (11) of LEDs and a reference potential.
